Europäisches Patentamt

European Patent Office

Office européen des brevets

(11) Numéro de publication: **0 022 011**
**B1**

(12) **FASCICULE DE BREVET EUROPEEN**

(45) Date de publication du fascicule du brevet: **19.06.85**

(21) Numéro de dépôt: **80400929.8**

(22) Date de dépôt: **23.06.80**

(51) Int. Cl.⁴: **F 16 B 13/06, H 02 G 3/08**

(54) Dispositif d'assemblage à écrou expansible.

(30) Priorité: **26.06.79 FR 7916672**

(43) Date de publication de la demande:
**07.01.81 Bulletin 81/01**

(45) Mention de la délivrance du brevet:
**19.06.85 Bulletin 85/25**

(84) Etats contractants désignés:
**BE CH DE GB IT LI NL SE**

(56) Documents cités:
**FR-A- 958 326**
**FR-A-2 300 482**
**FR-A-2 420 049**

(73) Titulaire: **MERLIN GERIN**
**Rue Henri Tarze**
**F-38050 Grenoble Cedex (FR)**

(72) Inventeur: **Ronseaux, Robert**
**Merlin Gerin Rue Henri Tarze**
**F-38050 Grenoble Cedex (FR)**
Inventeur: **Terrier, Gérard**
**Merlin Gerin Rue Henri Tarze**
**38050 Grenoble Cedex (FR)**

(74) Mandataire: **Kern, Paul et al**
**Merlin Gerin Sce. Brevets 20, rue Henri Tarze**
**F-38050 Grenoble Cedex (FR)**

EP 0 022 011 B1

Courier Press, Leamington Spa, England.

## Description

L'invention est relative à un dispositif d'assemblage rigide démontable d'un bloc auxiliaire à un boîtier moulé à éléments assemblés par des rivets tubulaires, notamment à un boîtier moulé d'un disjoncteur miniature, comprenant:

— une vis de serrage pour métaux à corps cylindrique et à tête prenant appui sur ledit bloc auxiliaire,

— un écrou à alésage interne cylindrique fileté et à extrémité entaillée déformable radialement,

— une douille non taraudée, intercalée entre l'écrou et la tête de ladite vis et ayant une première susceptible de coopérer avec ladite extrémité entaillée dudit écrou pour bloquer ledit écrou par expansion radiale de l'extrémité entaillée dans le rivet,

— l'ensemble expansible douille-écrou étant susceptible de s'insérer dans l'extrémité du rivet tubulaire et de recevoir à vissage la partie cylindrique filetée de ladite vis.

Un dispositif d'assemblage connu (FR—A—958.326) comporte un écrou expansible engagé à frottement dans un alésage de façon à empêcher la rotation de l'écrou lorsqu'on visse la vis dans l'écrou. Ce dispositif nécessite un calibrage précis de l'alésage difficile à réaliser sur des rivets tubulaires, dont l'extrémité est déformée lors de l'opération de rivetage. Un montage de l'écrou avec jeu empêche le serrage et de ce fait l'assemblage. Certains rivets tubulaires d'assemblage des boîtiers moulés des disjoncteurs tournent dans leur logement et un écrou engagé à frottement peut entraîner en rotation le rivet et empêcher le vissage. L'assemblage connu n'est donc pas utilisable pour une fixation sur des rivets tubulaires.

La présente invention a pour but de remédier à ces inconvénients. Elle est caractérisée par le fait qu:

— ladite première extrémité de la douille est en forme de coin, et que

— l'autre extrémité de la douille présente une tête d'immobilisation en rotation susceptible de s'insérer dans un logement de forme conjuguée.

L'invention permet de réaliser un dispositif simple d'assemblage, dans lequel toute rotation de l'écrou est évitée lors du vissage. L'invention présente l'avantage de ne nécessiter aucune modification du disjoncteur standard qui est fabriqué en grande série. La douille est immobilisée par le logement ménagé dans le bloc auxiliaire et l'extrémité en coin de la douille retient à son tour l'écrou.

Les éléments constitutifs de l'assemblage, notamment la vis, l'écrou et la douille, sont des pièce de fabrication courante, l'écrou étant par exemple une pièce tubulaire à filetage interne dont l'extrémité est entaillée par un trait de scie.

La douille et l'écrou sont avantageusement en laiton, de manière à présenter une élasticité suffisante à la déformation élastique des bords de l'entaille venant s'incruster dans la paroi interne des rivets.

Selon un développement de l'invention, permettant d'éviter toute erreur de montage, les éléments d'assemblage, en l'occurrence la vis, la douille et l'écrou, sont livrés assemblés et les orifices de passage de la vis ménagés dans le bloc auxiliaire sont agencés en fentes permettant l'insertion latéralement de la vis sans enlèvement de l'écrou et de la douille.

D'autre avantages et caractéristiques de l'invention resortiront plus clairement de la description qui va suivre d'un mode de mise en oeuvre de l'invention, donné à titre d'exemple non limitatif et représenté au dessin annexé, dans lequel:

la figure 1 est une vue schématique en plan d'un disjoncteur à boîtier moulé auquel est assemblé un bloc auxiliaire par un dispositif d'assemblage, selon l'invention;

la figure 2 est une vue éclatée, à échelle agrandie et en coupe du dispositif d'assemblage selon la fig. 1;

la figure 3 est une vue à échelle agrandie de la douille et de l'écrou, représentée à la figure 2;

la figure 4 est une vue en plan de la douille et de l'écrou de la figure 3.

Sur les figures, un disjoncteur à boîtier moulé, désigné par la repère général 10, notamment un disjoncteur miniature bipolaire est constitué par l'association de deux pôles 12, 14 accolés l'un à l'autre et réunis par des rivets 16 dont les têtes 18 sont logées dans un évidement 20.

Il est clair que le disjoncteur peut comporter un nombre supérieur de pôles ou le cas échéant un seul pôle, les rivets 16 réunissant les deux parties constitutives du boîtier moulé. Les rivets 16 sont du type tubulaire et sont généralement au nombre de quatre répartis ou disposés au voisinage des quatre angles du boîtier moulé.

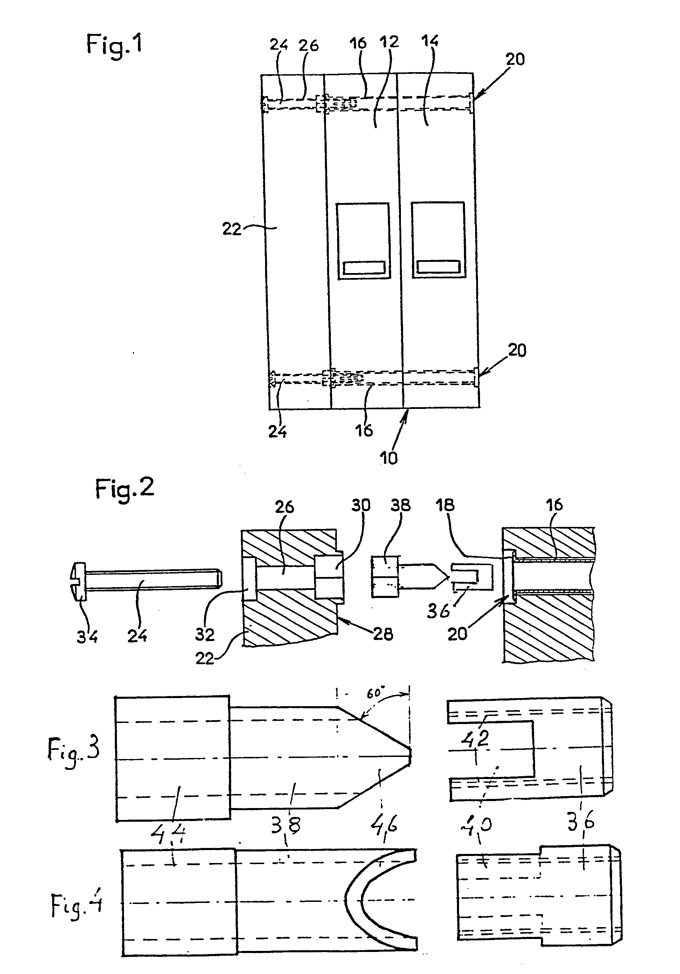

Un bloc auxiliaire 22, contenant par exemple une bobine à émission de courant ou un contact auxiliaire, est accolé au boîtier moulé du pôle 12 et solidarisé à ce dernier par une ou plusieurs vis 24 traversant des orifices transversaux 26 ménagés dans le boîtier du bloc 22. Ce boîtier est avantageusement en matière moulée et son profil correspond à celui du boîtier du disjoncteur 10. L'ensemble peut être du type à fixation par encliquetage sur un rail (non représenté). En se référant plus particulièrement à la fig. 2, on voit que l'orifice 26 débouche sur la face 28 accolée au pôle 12 dans un évidement 30 de section carrée. L'extrémité opposée de l'orifice 26 débouche dans un évidement 32 de logement de la tête 34 de la vis 24. L'orifice 26 est ouvert sur sa tranche pout constituer une rainure ou fente dans laquelle peut être introduite la vis 24, équipée de son écrou 36 par glissement latéral. L'écrou 36, représenté en détail sur les figures 3 et 4, est constitué par un manchon cylindrique de diamètre extérieur léqèrement inférieur au diamètre interne du rivet 16, ct présentant une entaille 40 sur l'une de ses extrémités. L'entaille 40 en forme de trait de scie est d'une largeur voisine de celle de l'alésage interne de l'écrou 36, de manière à ne laisser subsister que deux languettes 42 constituant les bords de l'entaille 40.

Le dispositif d'assemblage comporte en outre une douille 38 enfilée sur la vis 24 entre la tête 34 et l'écrou 36. Le diamètre de l'alésage interne de la douille 38 est supérieur à celui de la vis 24 pour autoriser au coulissement libre de la douille 38 sur la vis 24. La douille 38 comporte sur l'une de ses extrémités une tête carrée 44 de section conjuguée à celle de l'évidement 30. L'extrémité opposée à la tête 44 de la douille 38 est taillée en forme de coin 46, par exemple d'un angle voisin de 60°, la douille étant disposée sur la vis 24 de telle manière que l'extrémité en coin 46 est susceptible de s'insérer dans l'entaille 40 entre les languettes 42 de l'écou 36.

Le dispositif d'assemblage selon l'invention est mis en oeuvre de la manière suivante:

La ou les vis 24, équipées de douilles 38 et des écrous expansibles 36, sont livrées avec le bloc auxiliaire 22. Pour le montage il suffit de glisser les vis 24 dans les rainures ou orifices 26, la douille et l'écrou 36 étant disposés du côté de la face 28. En accolant le bloc 22 contre le disjoncteur 10, l'écrou 36 et la partie adjacente de la douille 38 pénètrent dans l'extrémité du rivet 16, tandis que la tête 44 de la douille 38 pénètre dans l'évidement 30. La douille 38 et l'écrou 36 sont immobilisés en rotation par la section polygonale de l'évidement 30 et de la tête 44 et par l'emboîtement du coin 46 dans l'entaille 40, et lors du vissage de la vis 24 cette dernière se visse dans l'écrou 36. Lors du serrage le coin 46 pénètre dans l'entaille 40 en écartant les languettes 42 dont les bords s'incrustent dans la paroi interne du rivet 16 solidarisant l'écrou 36 au rivet 16. La force d'incrustation dépend du degré de serrage de la vis 24 qui pousse le bloc auxiliaire 22 contre le disjoncteur 10. Le démontage du bloc auxiliaire 22 s'effectue par simple dévissage des vis 24, l'élasticité des languettes 42 provoquant le rétrécissement de l'écrou 36 et la libération du bloc 22.

L'invention n'est bien entendu nullement limitée au mode de mise en oeuvre plus particulièrement décrit.

## Revendications

1. Dispositif d'assemblage rigide démontable d'un bloc auxiliaire (22) à un boîtier moulé (10) éléments (12, 14) assemblés par des rivets tubulaires (16) notamment à un boîtier moulé d'un disjoncteur miniature, comprenant:

— une vis (24) de serrage pour métaux à corps cylindrique et à tête (34) prenant appui sur ledit bloc auxiliaire (22),
— un écrou (36) à alésage interne cylindrique fileté et à extrémité (40) entaillée déformable radialement,
— une douille (38) non taraudée, intercalée entre l'écrou (36) et la tête (34) de ladite vis (24) et ayant une première extrémité (46) susceptible de coopérer avec ladite extrémité (40) entaillée dudit écrou pour bloquer ledit écrou (36) par expansion radiale de l'extrémité (40) entaillée dans le rivet (16),
— l'ensemble expansible douille-écrou (36, 38) étant susceptible de s'insérer dans l'extrémité du rivet tubulaire (16) et de recevoir à vissage la partie cylindrique filetée de ladite vis (24),

caractérisé par le fait que:

— ladite première extrémité (46) de la douille (38) est en forme de coin, et que
— l'autre extrémité de la douille (38) présente une tête (44) d'immobilisation en rotation susceptible de s'insérer dans un logement (30) de forme conjuguée.

2. Dispositif d'assemblage selon la revendication 1, caractérisé en ce que ledit logement (30) de la tête (44) d'immobilisation est ménagé dans la face (28) du bloc auxiliaire (22) accolée au boîtier moulé.

3. Dispositif d'assemblage selon la revendication 1 ou 2, caractérisé par le fait que l'entaille (40) de l'extrémité entaillée dudit écrou (36) présente des faces latérales (42) parallèles en position non expansée, et que la largeur de ladite entaille est sensiblement égale au diamètre de l'alésage de l'écrou.

4. Dispositif d'assemblage selon la revendication 3, caractérisé en ce que ledit écrou (36) est en laiton.

5. Dispositif d'assemblage selon l'une quelconque des revendications précédentes, caractérisé en ce que ladite douille (38) présente une extrémité à double biseau en forme de coin (46) susceptible de pénétrer dans l'extrémité (40) entaillée dudit écrou (36) et d'écarter les faces latérales (42) de l'entaille.

6. Dispositif d'assemblage selon la revendication 5, caractérisé en ce que l'angle desdits biseaux est d'environ 60°.

7. Dispositif d'assemblage selon l'une quelconque des revendications précédentes, caractérisé en ce que ledit bloc auxiliaire (22) comporte un trou (26) de traversée de ladite vis (24), ouvert sur la tranche pour former une rainure dans laquelle peut être insérée latéralement ladite vis (24) équipée de la douille (38) et de l'écrou (36).

## Patentansprüche

1. Starre, demontierbare Verbindungsvorrichtung eines Hilfsblocks (22) an einem Isoliergehäuse (10) geformt aus Elementen (12, 14), die durch Rohrnieten (16) verbunden sind insbesondere an einem Gehäuse eines Leitungsschutzschalters bestehend aus,

— einer Presschraube (24) für Metalle mit zylinderförmigem Körper und mit Kopf (34), der an dem genannten Hilfsblock (22) an liegt;

— einer Mutter (36) mit innerer zylinderförmiger Gewindebohrung und mit eingeschnittenem Ende (40), das radial deformierbar ist,

— einer gewindelosen Hülse (38), die zwischen der Mutter (36) und dem Kopf (34) der genannten Schraube (24) eingesetzt ist, und die ein Ende (46) aufweist, das geeignet ist, mit dem genannten Ende (40) der genannten Mutter zusammenzuarbeiten, um die genannte Mutter (36) durch Radialausdehnung des in der Niete (16) eingeschnittenen Endes (40) zu blokkieren,

wobei die ausdehnbare Baugruppe Hülse-Mutter (36, 38), geeignet ist, sich in das Ende der rohrförmigen Niete (16) einzufügen und durch Schraubverbindung den zylinderförmigen Gewindeteil der genannten Schraube (24) aufzunehmen,

dadurch gekennzeichnet, dass:

— das erste genannte Ende (46) der Hülse (38) keilförmig, und dass

— das andere Ende der Hülse (38) einen Kopf (44) aufweist, der geeignet ist, sich in eine Lagerung (30) von entsprechender Form einzufügen und eine Drehung zu vermeiden.

2. Verbindungsvorrichtung gemäss des Anspruchs 1, dadurch gekennzeichnet, dass die genannte Lagerung (30) des nichtbewegbaren Kopfes (44) an der Aussenseite (28) des Hilfsblocks (22), die mit dem geformten Gehäuse verbunden ist, angeordnet ist.

3. Verbindungsvorrichtung gemäss des Anspruchs 1 oder 2, dadurch gekennzeichnet, dass der Einschnitt (40) des eingeschnittenen Endes der genannten Mutter (36) parallele Seitenflächen in nicht ausgedehnter Lage aufweist und dass die Breite des genannten Einschnitts fast dem Bohrungsdurchmesser der Mutter entspricht.

4. Verbindungsvorrichtung gemäss des Anspruchs 3, dadurch gekennzeichnet, dass die genannte Mutter (36) aus Messing ist.

5. Verbindungsvorrichtung gemäss irgendeiner der vorherigen Ansprüche, dadurch gekennzeichnet, dass die genannte Hülse (38) an einem Ende (46) eine keilförmige doppelte Abschrägung aufweist, die geeignet ist, in das eingeschnittene Ende (40) der genannten Mutter (36) einzudringen und die Seitenflächen (42) des Einschnitts auseinanderzutreiben.

6. Verbindungsvorrichtung gemass der Anspruchs 5, dadurch gekennzeichnet, dass der Winkel der genannten Abschrägungen ungefähr 60° beträgt.

7. Verbindungsvorrichtung gemäss irgendeiner der vorherigen Ansprüche, dadurch gekennzeichnet, dass der genannte Hilfblock (22) ein Loch (26) zum Durchgang der genannten Schraube (24) aufweist, das an der Kante offen ist, um eine Nut zu bilden, in die die mit der Hülse (38) und der Mutter (36) ausgestattete genannte Schraube (24) seitlich eingefügt werden kann.

**Claims**

1. Rigid removable assembling device for fitting an auxiliary block (22) onto a moulded box (10) made of elements (12, 14) held together by means of tubular rivets (16), namely the moulded box of a miniature circuit breaker, comprising:

— a metal screw (24) with cylindrical body, whose head rests against said auxiliary block (22),

— an internally threaded nut (36) with a radially deformable notched end (40),

— a not-threaded bushing (38) placed between nut (36) and head (34) of said screw (24), having one end (46) intended to contribute with said notched end (40) of said nut to block said nut (36) through radial expansion of notched end (40) inside rivet (16);

— the expansible bushing-nut unit (36, 38) being intended to be inserted into the end of tubular rivet (16) and take up the threaded cylindrical part of said screw (24),

characterized by the fact that:

— said first end (46) of bushing (38) is wedge-shaped, and that

— the other end of bushing (38) has a rotation lock pin (44) intended for penetrating into a hole (30) of appropriate form.

2. Assembling device according to claim 1, characterized by the fact that said hole (30) of locking pin (44) is contrived in face (28) of auxiliary block (22) fitting onto the moulded box.

3. Assembling device according to claim 1 or 2, characterized by the fact that notch (40) of notched end of said nut (36) has side faces (42) which are parallel in normal position, and that the width of said notch is practically equal to the inner diameter of the nut.

4. Assembling device according to claim 3, characterized by the fact that said nut (36) is made of brass.

5. Assembling device according to any one of the previous claims, characterized by the fact that said bushing (36) has a wedge-shaped double bevel end (46) intended for penetrating into notched end (40) of said nut (36) and for pushing the side faces (42) of the notch away from one another.

6. Assembling device according to claim 5, characterized by the fact that the angle of said bevels is approximately of 60°.

7. Assembling device according to any one of the previous claims, characterized by the fact that said auxiliary block (22) has a through hole (26) for said screw (24), open at the edge to form a groove in which said screw (24) equipped with bushing (38) and nut (36) can be inserted laterally.

**0 022 011**

Fig.1

Fig.2

Fig.3

Fig.4

1